# EUROPEAN PATENT SPECIFICATION

(11) **EP 4 458 656 B1**
(45) Date of publication and mention of the grant of the patent: **09.12.2026**
(21) Application number: 23902080.3
(22) Date of filing: 30.06.2023
(51) Int. Cl.: B62K 15/00, B62K 5/01

(54) **FOLDABLE MOBILITY SCOOTER**
ZUSAMMENKLAPPBARER MOBILITÄTSROLLER
TROTTINETTE DE MOBILITÉ PLIABLE

(30) Priority: 22.12.2022 CN 202211688166
(43) Date of publication of application: 06.11.2024
(73) Proprietor: Zhejiang Innuovo Rehabilitation Devices Co., Ltd, Dongyang Jinhua, Zhejiang 322118 (CN)
(72) Inventor: ZHU, Jingguo, Jinhua, Zhejiang 322118 (CN); LONG, Yue, Jinhua, Zhejiang 322118 (CN); ZHANG, Xuan, Jinhua, Zhejiang 322118 (CN); WU, Fugen, Jinhua, Zhejiang 322118 (CN); FANG, Zheng, Jinhua, Zhejiang 322118 (CN)
(74) Representative: Lorenz Seidler Gossel Part. mbB
(86) International application number: PCT/CN2023/104525
(87) International publication number: WO 2024/124870

(56) References cited:
- EP-A1- 3 473 535
- CN-A- 106 585 819
- CN-A- 107 010 153
- CN-A- 116 101 413
- CN-U- 205 554 463
- CN-U- 216 994 700
- CN-U- 217 805 093
- CN-U- 217 805 093
- US-A1- 2005 077 097
- US-A1- 2019 168 837
- US-B2- 10 773 767

## Description

### Technical Field of the Invention

The present invention relates to an electric scooter and in particular to a foldable scooter.

### Background of the Invention

Chinese Patent Application 202120499916.1 disclosed a foldable electric scooter, including a frame assembly, a handle assembly and a seat assembly, wherein the handle assembly is arranged at the front end of the frame, and includes a handle, an upper strut, a lower strut and a strut hand wheel; wherein the lower strut is fixedly connected to the frame, the upper strut is arranged above the lower strut, and connecting rings are arranged on both the bottom of the upper strut and the top of the lower strut; a pin is provided on the strut hand wheel, and the two connecting rings are connected through the pin; the strut hand wheel is used to adjust the connection tightness of the two connecting rings; the handle is fixedly connected to the top of the upper strut; the seat assembly is arranged in the middle portion of the frame, and includes a support rod, an upper folding mechanism, a lower folding mechanism and a seat cushion.

In the above solution, by folding the handle assembly and the seat assembly, the space occupied by the whole electric scooter is reduced. However, the above solution has the following disadvantages: the frame cannot be folded, so that the overall length of the folded electric scooter is still the same as the length of the scooter when in normal use, and the space in the horizontal direction occupied by the scooter when lying on the ground cannot be reduced, so that it is disadvantageous for storage and transportation.

Document EP 3 473 535 A1 discloses a motorized foldable vehicle with a foldable frame provided which is mounted between a front wheel support and a rear wheel support of a foldable motorized vehicle. The foldable frame includes a first upper bar, a first lower bar, a second upper bar, a second lower bar, a first pin-joint piece and a second pin-joint piece. The first pin-joint piece and the second pin-joint piece are respectively provided with a first pin-joint hole and a second pin-joint hole. An end of the first lower bar is pin-jointed with a lower end of the front wheel support, and another end of the first lower bar is fixed with the first pin-joint piece. An end of the second lower bar is pin-jointed with a lower end of the rear wheel support, and another end of the second lower bar is fixed with the second pin-joint piece. The first pin-joint piece is pin-jointed with the second pin-joint piece through the first pin-joint hole, and end surfaces of the first pin-joint piece and the second pin-joint piece respectively abut against end portions of the second lower bar and the first lower bar. An end of the first upper bar is pin-jointed with an upper end of the front wheel support, and another end of the first upper bar is pin-jointed at the second pin-joint hole of the second pin-joint piece. An end of the second upper bar is pin-jointed with the rear wheel support, and another end of the second upper bar is pin-jointed at the second pin-joint hole of the first pin-joint piece.

### Summary of the Invention

An object of the present invention is to provide a foldable scooter, which can realize the folding of the scooter frame, can make the folded scooter occupy less space, and is more convenient for storage and transportation.

To achieve the above object, the present invention employs the following technical solutions. A foldable scooter is provided, including a front frame and a rear frame, wherein the front frame includes a front fixation portion, and a first connecting frame and a second connecting frame which extend longitudinally; the front and rear ends of the first connecting frame are oppositely located above the front and rear ends of the second connecting frame; the rear frame includes a rear fixation portion, and a third connecting frame and a fourth connecting frame which extend longitudinally; both the front end of the first connecting frame and the front end of the second connecting frame are fixed to the front fixation portion in a rotatable manner; the front end of the third connecting frame is fixed to the rear end of the first connecting frame in a rotatable manner, the third connecting frame deviating from its end is fixed to the rear end of the second connecting frame in a rotatable manner, and the rear end of the third connecting frame is connected to the rear fixation portion; and, the rear end of the fourth connecting frame is fixed to the third connecting frame or the rear fixation portion in a rotatable manner, while the rear end thereof is fixed to the first connecting frame in a rotatable manner.

In the present invention, four rotation fulcrums are formed by the front and rear ends of the first connecting frame and the front and rear ends of the second connecting frame, and four rotation fulcrums are also formed between the third connecting frame and the fourth connecting frame and the front frame and between the third connecting frame and the fourth connecting frame, so that the front frame and the rear frame can be turned over and folded, and the front fixation portion and the rear fixation portion get close to each other after being folded. That is, the lower end of the rudder stock portion and the lower end of the control driving portion of the electric scooter can get close to each other. Thus, the folded electric scooter can stand up, thereby reducing the floor space and the space volume occupied in the horizontal direction. Although some space is occupied in the height direction, it is more convenient for storage and transportation. Moreover, since the first connecting frame is located above the second connecting frame and the fourth connecting frame is also fixed to the third connecting frame or the rear fixation portion in a rotatable manner, when the front frame and the rear frame are turned over and folded, the first connecting frame and the second connecting frame will be closer to each other, and the third connecting frame and the fourth connecting frame will be closer to each other, so that the scooter of the present invention can be more compact after being folded, have less floor space, and can be conveniently placed in narrow regions such as car trunks.

The front fixation portion and the rear fixation portion in the present invention are portions whose structures will not change when the electric scooter is folded, for example, the front wheels and the lower end of the rudder stock in the front portion of the front frame, the rear wheels, rear auxiliary wheels, the controller, the power supply and other integrated portions in the rear portion of the rear frame. After the scooter of the present invention is folded, the movement of the folded scooter can be realized by pulling the handle at the upper end of the rudder stock. The scooter of the present invention can be used with any one of the existing rudder stock folding (telescopic) structures and seat folding structures, so that the folded scooter occupies less space.

In accordance with the invention the third connecting frame includes third connecting rods which are oppositely arranged left and right; the fourth connecting frame includes fourth connecting rods which are oppositely arranged left and right; the two fourth connecting rods are oppositely located between the two third connecting rods; the first connecting frame includes two first connecting rods which are oppositely arranged; a transverse connecting rod is connected between the two first connecting rods; the front ends of the fourth connecting rods are fixed to the transverse connecting rod in a rotatable manner; the second connecting frame includes two second connecting rods which are oppositely arranged left and right; and, the rear end of each of the second connecting rods is fixed to one of the third connecting rods in a rotatable manner. With the above arrangement, the structure of the scooter of the present invention can be more stable, and the structure of the folded scooter can be more compact and have less floor space.

Preferably, the first connecting frame is fixed to front ends of first locking hooks in a rotatable manner, horizontal shaft portions are provided at the rotatable joints of the third connecting frame with the second connecting frame, and the first locking hooks are hooked on the horizontal shaft portions. The first locking hooks cooperate with the horizontal shaft portions to play a limiting role, thereby preventing the front and rear frames from shaking when the scooter passes through a bumpy road in normal use.

Preferably, a lifting handle is connected at the first locking hooks; and, when the lifting handle is moved upward, the front frame and the rear frame are folded, and the first locking hooks are separated from the horizontal shaft portions. **The** lifting handle is used by a user to manually fold the scooter of the present invention. **The** user pulls the lifting handle upward, so as to drive the first locking hooks to turn over and drive the joint of the front frame with the rear frame to move upward, so that it is convenient to fold the front frame and the rear frame and the front fixation portion and the rear fixation portion get close to each other.

Preferably, a front frame shell is provided at the front frame, a compression spring is provided on the inner side of the rear end of the front frame shell, and the first locking hooks have a tendency to turn over towards the horizontal shaft portions under the action of the compression spring. One end of the compression spring can be resisted against the front frame shell, while the other end thereof acts at the first locking hooks and the lifting handle to achieve a certain locking effect, so that the user needs to overcome the elastic force of the compression spring to realize the folding of the front frame and the rear frame.

Preferably, a second locking hook is arranged on the first connecting frame; the second locking hook deviating from its hook portion is fixed to the first connecting frame in a rotatable manner; a torsion spring is arranged between the second locking hook and the first connecting frame; a locking column is arranged on the fourth connecting frame; and, when the front frame and the rear frame are folded, the second locking hook is hooked on the locking column, and the second locking hook has a tendency to rotate towards the locking column under the action of the torsion spring. The second locking hook is used to lock the connection between the front frame and the rear frame after being folded, thereby preventing the folded scooter from restoring to its unfolded state due to shaking during storage and transportation.

In accordance with the invention a foldable seat is arranged above the third connecting frame; the foldable seat includes a seat plate; a fifth connecting rod and a sixth connecting rod, which are obliquely arranged, are connected between the rear end of the seat plate and the third connecting frame; both the fifth connecting rod and the sixth connecting rod extend forward from the top down; the upper and lower ends of the fifth connecting rod are fixed to the third connecting frame and the seat plate in a rotatable manner, respectively; the lower end of the sixth connecting rod is fixed to the third connecting frame in a rotatable manner; an arc-shaped guide groove is formed at the rear end of the seat plate, the upper end of the sixth connecting rod is fitted in the arc-shaped guide groove in a sliding manner, and the center of the arc-shaped guide groove is located on a rotating axis of the upper end of the fifth connecting rod; a middle portion of the fifth connecting rod is fixed to an upper end of a seventh connecting rod in a rotatable manner; the third connecting frame includes a connecting strut; and, a middle portion of the connecting strut is fixed to the third connecting frame in a rotatable manner, the upper end of the connecting strut is fixed to the lower end of the seventh connecting rod in a rotatable manner, and the lower end of the connecting strut is fixed to the fourth connecting frame in a rotatable manner.

In the present invention, the folding of the frame and the folding of the seat are linked. When the scooter frame is folded, the seat will also be folded in linkage, so that it is more convenient to fold the scooter of the present invention. The two ends of the arc-shaped guide groove are used to limit the position of the sixth connecting rod and also guide the movement of the sixth connecting rod.

Preferably, the fifth connecting rod has an inner cavity extending in its length direction, and the sixth connecting rod is located in the inner cavity. With the above arrangement, the seat folding structure of the present invention is more compact.

In accordance with the invention a first support connecting rod and a second support connecting rod are arranged between the seat plate and the fifth connecting rod; the lower end of the first support connecting rod is fixed to the fifth connecting rod in a rotatable manner; the upper end of the second support connecting rod is fixed to the seat plate in a rotatable manner; the lower end of the second support connecting rod is fixed to the upper end of the first support connecting rod in a rotatable manner; and, a limiting protrusion for supporting the second support connecting rod to limit the second support connecting rod from swinging downward about its lower end is provided at the upper end of the first support connecting rod. By providing the first support connecting rod and the second support connecting rod, the stress of the seat plate is increased, and the weight bearing effect is thus improved.

Preferably, auxiliary wheel frames are arranged on the rear side of the rear fixation portion, and two auxiliary wheels spaced up and down are arranged at the rear ends of the auxiliary wheel frames. After the scooter of the present invention is folded, it can be supported solely by the auxiliary wheels, so that the front wheels and the rear wheels can be folded and staggered, and the structure of the folded scooter is more compact.

The present invention has the advantage that the folded scooter occupies less space and is more convenient for storage and transportation.

### Brief Description of the Drawings

FIG. 1 is a schematic diagram of a first state of the present invention;
FIG. 2 is a schematic diagram of a second state of the present invention;
FIG. 3 is a schematic diagram of a folded state of the present invention; and
FIG. 4 is a sectional view of the present invention.

### Detailed Description of the Invention

The present invention will be further described below by specific embodiments with reference to the accompanying drawings.

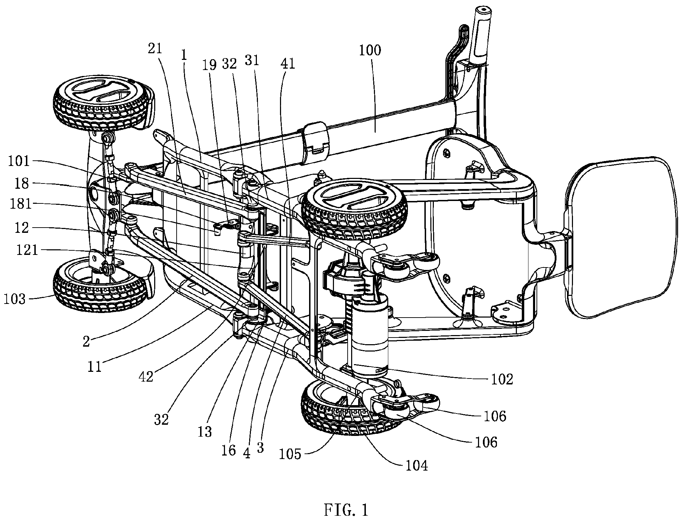

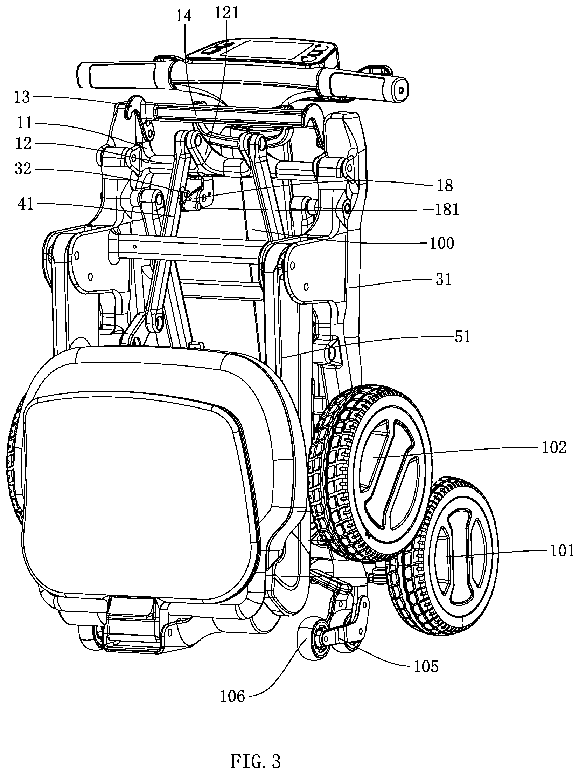

As shown in FIGS. 1-3, this embodiment discloses a foldable scooter, including a front frame and a rear frame. The front frame includes a front fixation portion 101, and a first connecting frame 1 and a second connecting frame 2 which extend longitudinally. The front and rear ends of the first connecting frame 1 are oppositely located above the front and rear ends of the second connecting frame 2. The rear frame includes a rear fixation portion 102, and a third connecting frame 3 and a fourth connecting frame 4 which extend longitudinally. Both the front end of the first connecting frame 1 and the front end of the second connecting frame 2 are fixed to the front fixation portion 101 in a rotatable manner, and form a first hinge joint 201 and a second hinge joint 202, respectively. The front end of the third connecting frame 3 is fixed to the rear end of the first connecting frame 1 in a rotatable manner and forms a hinge joint 203. The third connecting frame 3 deviating from its end is fixed to the rear end of the second connecting frame 2 in a rotatable manner and forms a fourth hinge joint 204. The rear end of the third connecting frame 3 is integrally connected to the rear fixation portion 102. The rear end of the fourth connecting frame 4 is fixed to the third connecting frame 3 in a rotatable manner and forms a fifth hinge joint 205, while the rear end thereof is fixed to the first connecting frame 1 in a rotatable manner and forms a sixth hinge joint. The front fixation portion 101 in this embodiment is a front wheel steering mechanism of a rudder stock 100 fixed with front wheels 103. The rear fixation portion 102 in this embodiment is a rear driving portion fixed with rear wheels 104 and a driving bridge. Two auxiliary wheel frames 105 extending backward are arranged on the frame body of the rear fixation portion 102, and the rear ends of the auxiliary wheel frames 105 are arranged vertically and provided with two auxiliary wheels 106 spaced up and down. The two auxiliary wheel frames 105 are spaced left and right. The rudder stock 100 in this embodiment is a telescopic rudder stock 100, and can adopt any telescopic lifting structure of the rudder stock 100 in the current market.

In this embodiment, the third connecting frame 3 includes third connecting rods 31 which are oppositely arranged left and right, and the fourth connecting frame 4 includes fourth connecting rods 41 which are oppositely arranged left and right. The two fourth connecting rods 41 are oppositely located between the two third connecting rods 31. The first connecting frame 1 includes two first connecting rods 11 which are oppositely arranged. A transverse connecting rod 12 is connected between the two first connecting rods 11. The front ends of the fourth connecting rods 41 are fixed to the transverse connecting rod 12 in a rotatable manner. The second connecting frame 2 includes two second connecting rods 21 which are oppositely arranged left and right. The rear end of each of the second connecting rods 21 is fixed to one of the third connecting rods 31 in a rotatable manner. The two fourth connecting rods 41 of the fourth connecting frame 4 forms a splayed structure, and the distance between the front ends of the two fourth connecting rods is less than the distance between the rear ends of the two fourth connecting rods 41. An extension section 121 extending backward and downward to connect the fourth connecting rods is provided on the transverse connecting rod 12. The two second connecting rods 12 also form a splayed structure, and the distance between the front ends of the two second connecting rods 21 is less than the distance between the rear ends of the two second connecting rods 21.

Front ends of first locking hooks 13 are fixed to the transverse connecting rod 12 in a rotatable manner, horizontal shaft portions 32 are provided at the rotatable joints of the third connecting frame 3 with the second connecting frame 2, and the first locking hooks 13 are hooked on the horizontal shaft portions 32. The two first locking hooks 13 are connected through a connecting rod 14, and a lifting handle 15 is fixed on the connecting rod 14 in a rotatable manner. When the lifting handle 15 is moved upward, the front frame and the rear frame are folded, and the first locking hooks 13 are separated from the horizontal shaft portions 32. A front frame shell (not shown) is provided at the front frame, and a compression spring 16 is provided on the inner side of the rear end of the front frame shell. The first locking hooks 13 have a tendency to turn over toward the horizontal shaft portions 32 under the action of the compression spring 16. In this embodiment, a positioning protrusion 17 for positioning the end of the compression spring 16 is arranged on the connecting rod 14. One end of the compression spring 16 is resisted against the front frame shell, while the other end thereof is sleeved outside the positioning protrusion 17 and resisted against the connecting rod 14.

A second locking hook 18 is arranged on the transverse connecting rod 12 of the first connecting frame 1. The second locking hook 18 deviating from its hook portion is fixed to the transverse connecting rod 12 in a rotatable manner. A torsion spring 19 is arranged between the second locking hook 18 and the transverse connecting rod 12. A locking column 42 extending transversely is arranged on the fourth connecting rods 41 of the fourth connecting frame 4. When the front frame and the rear frame are folded, the second locking hook 18 is hooked on the locking column 42, and the second locking hook 18 has a tendency to rotate towards the locking column 42 under the action of the torsion spring 19.In order to facilitate the unlocking of the second locking hook 18, an unlocking protrusion 181 extending transversely is arranged on the hook portion of the second locking hook 18.

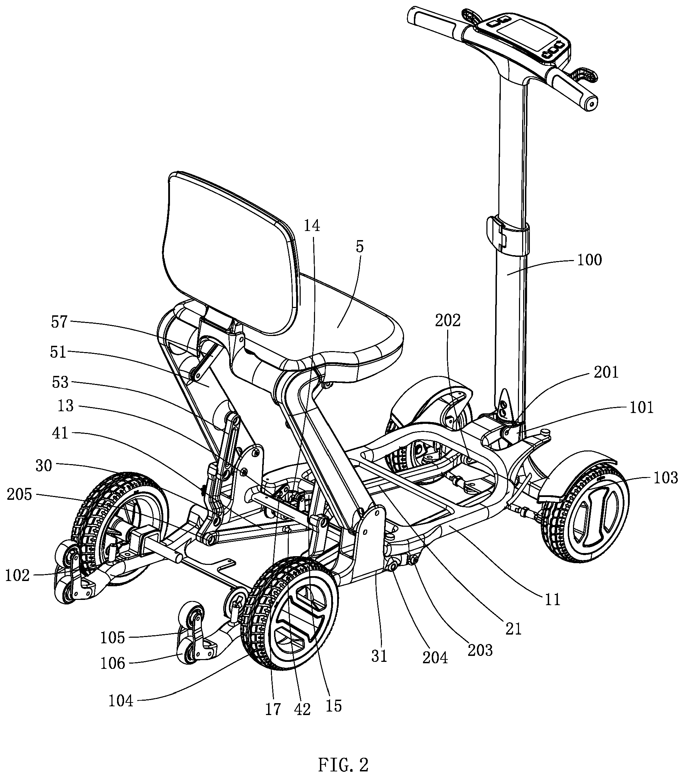

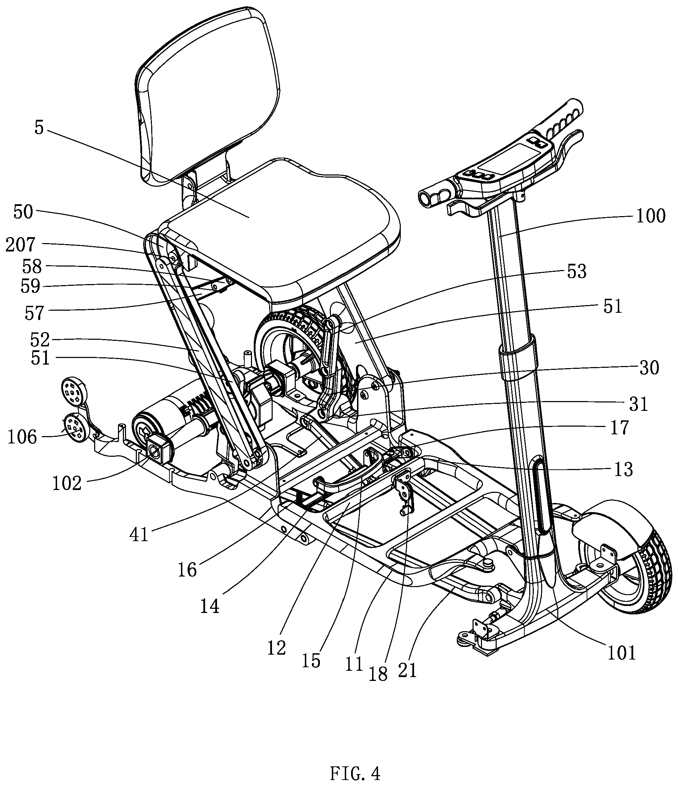

As shown in FIGS. 2 and 4, a foldable seat is arranged above the third connecting frame 3. The foldable seat includes a seat plate 5. A fifth connecting rod 51 and a sixth connecting rod 52 which are obliquely arranged are connected between the rear end of the seat plate 5 and the third connecting frame 3. Both the fifth connecting rod 51 and the sixth connecting rod 52 extend forward from the top down. The upper and lower ends of the fifth connecting rod 51 are fixed to the third connecting frame 3 and the seat plate 5 in a rotatable manner, respectively. The lower end of the sixth connecting rod 52 is fixed to the third connecting frame 3 in a rotatable manner. An arc-shaped guide groove 50 is formed at the rear end of the seat plate 5, and a sliding protrusion (not shown) extending transversely is provided at the upper end of the sixth connecting rod 52. The sliding protrusion is always fitted in the arc-shaped guide groove 50 in a sliding manner, and the center of the arc-shaped guide groove 50 is located on a rotating axis 207 of the upper end of the fifth connecting rod 51. A middle portion of the fifth connecting rod 51 is fixed to an upper end of a seventh connecting rod 53 in a rotatable manner. The third connecting frame 3 includes a connecting strut 30. A middle portion of the connecting strut 30 is fixed to the third connecting rod 31 of the third connecting frame 3 in a rotatable manner, the upper end of the connecting strut 30 is fixed to the lower end of the seventh connecting rod 53 in a rotatable manner, and the lower end of the connecting strut 30 is fixed to the rear end of the fourth connecting rod 41 of the fourth connecting frame 4 in a rotatable manner. The fifth connecting rod 51 has an inner cavity extending in its length direction, and the sixth connecting rod 52 is located in the inner cavity of the fifth connecting rod.

A first support connecting rod 57 and a second support connecting rod 58 are arranged between the seat plate 5 and the fifth connecting rod 51. The lower end of the first support connecting rod 57 is fixed to the fifth connecting rod 51 in a rotatable manner. The upper end of the second support connecting rod 58 is fixed to the seat plate 5 in a rotatable manner. The lower end of the second support connecting rod 58 is fixed to the upper end of the first support connecting rod 57 in a rotatable manner, and a limiting protrusion 59 for supporting the second support connecting rod 38 to limit the second support connecting rod 58 from swinging downward about its lower end is provided at the upper end of the first support connecting rod 57.

When a user needs to fold the scooter of the present invention, the rudder stock is contracted and lifted down. Then, the user pulls the lifting handle upward to unlock the first locking hooks, and continuously pulls the lifting handle upward to fold the front frame and the rear frame, so that the front fixation portion (front wheels) of the front frame and (rear wheels of) the rear frame get close to each other, and the four auxiliary wheels of the folded scooter are supported on the ground. Subsequently, the second locking hook is pulled, so that the second locking hook is hooked on the locking column, thereby locking the folded state of the scooter and realizing folding. Finally, the user can pull the handle above the rudder stock to push the scooter of the present invention.

The present invention has the advantage that the folded scooter occupies less space and is more convenient for storage and transportation.

## Claims

1. A foldable scooter, comprising a front frame and a rear frame, wherein the front frame comprises a front fixation portion (101), and a first connecting frame (1) and a second connecting frame (2), both of which extending longitudinally; front and rear ends of the first connecting frame (1) are oppositely located above front and rear ends of the second connecting frame (2), the rear frame comprises a rear fixation portion (102), and a third connecting frame (3) and a fourth connecting frame (4), both of which extending longitudinally; both the front end of the first connecting frame and the front end of the second connecting frame are fixed to the front fixation portion in a rotatable manner; a front end of the third connecting frame (3) is fixed to the rear end of the first connecting frame (1) in a rotatable manner, the third connecting frame (3) deviating from its end is fixed to the rear end of the second connecting frame (2) in a rotatable manner, and a rear end of the third connecting frame (3) is connected to the rear fixation portion; and, a rear end of the fourth connecting frame (4) is fixed to the third connecting frame (3) or the rear fixation portion in a rotatable manner, while the rear end thereof is fixed to the first connecting frame (1) in a rotatable manner,
wherein the third connecting frame (3) comprises two third connecting rods (31) which are oppositely arranged left and right, respectively; the fourth connecting frame (4) comprises two fourth connecting rods (41) which are oppositely arranged left and right, respectively; the two fourth connecting rods (41) are oppositely located between the two third connecting rods (31); the first connecting frame (1) comprises two first connecting rods (11) which are oppositely arranged; a transverse connecting rod (12) is connected between the two first connecting rods (11); the front ends of the fourth connecting rods (41) are fixed to the transverse connecting rod in a rotatable manner; the second connecting frame (2) comprises two second connecting rods (21) which are oppositely arranged left and right; and, the rear end of each of the second connecting rods (21) is fixed to one of the third connecting rods (31) in a rotatable manner and wherein a foldable seat is arranged above the third connecting frame (3); the foldable seat comprises a seat plate (5); a fifth connecting rod (51) and a sixth connecting rod (52) which are obliquely arranged are connected between a rear end of the seat plate (5) and the third connecting frame (3); both the fifth connecting rod (51) and the sixth connecting rod (52) extend forward from the top down; an upper end and a lower end of the fifth connecting rod (51) are fixed to the third connecting frame (3) and the seat plate in a rotatable manner, respectively the lower end of the sixth connecting rod (52) is fixed to the third connecting frame (3) in a rotatable manner; an arc-shaped guide groove (50) is formed at the rear end of the seat plate (5), the upper end of the sixth connecting rod (52) is fitted in the arc-shaped guide groove (50) in a sliding manner, and the center of the arc-shaped guide groove (50) is located on a rotating axis of the upper end of the fifth connecting rod (51); a middle portion of the fifth connecting rod (51) is fixed to an upper end of a seventh connecting rod (53) in a rotatable manner; the third connecting frame (3) comprises a connecting strut (30); and, a middle portion of the connecting strut (30) is fixed to the third connecting frame (3) in a rotatable manner, an upper end of the connecting strut (30) is fixed to the lower end of the seventh connecting rod (53) in a rotatable manner, and a lower end of the connecting strut (30) is fixed to the fourth connecting frame (4) in a rotatable manner,
**characterized in that**
a first support connecting rod (57) and a second support connecting rod (58) are arranged between the seat plate (5) and the fifth connecting rod (51); the lower end of the first support connecting rod (57) is fixed to the fifth connecting rod (51) in a rotatable manner; the upper end of the second support connecting rod (58) is fixed to the seat plate (5) in a rotatable manner; the lower end of the second support connecting rod (58) is fixed to the upper end of the first support connecting rod (57) in a rotatable manner; and, a limiting protrusion (59) for supporting the second support connecting rod (58) to limit the second support connecting rod from swinging downward about its lower end is provided at the upper end of the first support connecting rod (57).

2. The foldable scooter according to claim 1, wherein the first connecting frame is fixed to front ends of first locking hooks in a rotatable manner, horizontal shaft portions are provided at the rotatable joints of the third connecting frame with the second connecting frame, and the first locking hooks are hooked on the horizontal shaft portions.

3. The foldable scooter according to claim 2, wherein a lifting handle is connected at the first locking hooks; and, when the lifting handle is moved upward, the front frame and the rear frame are folded, and the first locking hooks are separated from the horizontal shaft portions.

4. The foldable scooter according to claim 2, wherein a front frame shell is provided at the front frame, a compression spring is provided on the inner side of the rear end of the front frame shell, and the first locking hooks have a tendency to turn over towards the horizontal shaft portions under the action of the compression spring.

5. The foldable scooter according to claim 1, wherein a second locking hook is arranged on the first connecting frame; the second locking hook deviating from its hook portion is fixed to the first connecting frame in a rotatable manner; a torsion spring is arranged between the second locking hook and the first connecting frame; a locking column is arranged on the fourth connecting frame; and, when the front frame and the rear frame are folded, the second locking hook is hooked on the locking column, and the second locking hook has a tendency to rotate towards the locking column under the action of the torsion spring.

6. The foldable scooter according to claim 1, wherein the fifth connecting rod has an inner cavity extending in its length direction, and the sixth connecting rod is located in the inner cavity.

7. The foldable scooter according to claim 1, wherein auxiliary wheel frames are arranged on a rear side of the rear fixation portion, and two auxiliary wheels spaced up and down are arranged at the rear ends of the auxiliary wheel frames.

## Patentansprüche

1. Ein zusammenklappbarer Roller, bestehend aus einem vorderen Rahmen und einem hinteren Rahmen, wobei der vordere Rahmen einen vorderen Befestigungsabschnitt (101) sowie einen ersten Verbindungsrahmen (1) und einen zweiten Verbindungsrahmen (2) umfasst,
die sich beide in Längsrichtung erstrecken; wobei das vordere und das hintere Ende des ersten Verbindungsrahmens (1)
befinden sich gegenüberliegend oberhalb des vorderen und hinteren Endes des zweiten Verbindungsrahmens (2); der hintere Rahmen umfasst einen hinteren Befestigungsabschnitt (102) sowie einen dritten Verbindungsrahmen (3) und einen vierten Verbindungsrahmen (4), die sich beide in Längsrichtung erstrecken; sowohl das vordere Ende des ersten Verbindungsrahmens als auch das vordere Ende des zweiten Verbindungsrahmens sind drehbar am vorderen Befestigungsabschnitt befestigt; ein vorderes Ende des dritten Verbindungsrahmens (3) ist drehbar am hinteren Ende des ersten Verbindungsrahmens (1) befestigt, der dritte Verbindungsrahmen (3) ist in einem von seinem Ende abweichenden Bereich drehbar am hinteren Ende des zweiten Verbindungsrahmens (2) befestigt, und ein hinteres Ende des dritten Verbindungsrahmens (3) ist mit dem hinteren Befestigungsabschnitt verbunden; und ein hinteres Ende des vierten Verbindungsrahmens (4) ist drehbar am dritten Verbindungsrahmen (3) oder am hinteren Befestigungsabschnitt befestigt, während dessen hinteres Ende drehbar am ersten Verbindungsrahmen (1) befestigt ist,
wobei der dritte Verbindungsrahmen (3) zwei dritte Verbindungsstangen (31) umfasst, die jeweils links und rechts gegenüberliegend angeordnet sind; der vierte Verbindungsrahmen (4) zwei vierte Verbindungsstangen (41) umfasst, die jeweils links und rechts gegenüberliegend angeordnet sind; die beiden vierten Verbindungsstangen (41) gegenüberliegend zwischen den beiden dritten Verbindungsstangen (31) angeordnet sind; der erste Verbindungsrahmen (1) umfasst zwei erste Verbindungsstangen (11), die einander gegenüberliegend angeordnet sind; eine Querverbindungsstange (12) ist zwischen den beiden ersten Verbindungsstangen (11) verbunden; die vorderen Enden der vierten Verbindungsstangen (41) sind drehbar an der Querverbindungsstange befestigt; der zweite Verbindungsrahmen (2) umfasst zwei zweite Verbindungsstangen (21), die links und rechts entgegengesetzt angeordnet sind; und das hintere Ende jeder der zweiten Verbindungsstangen (21) ist drehbar an einer der dritten Verbindungsstangen (31) befestigt
und wobei oberhalb des dritten Verbindungsrahmens (3) ein klappbarer Sitz angeordnet ist; der klappbare Sitz umfasst eine Sitzplatte (5); eine fünfte Verbindungsstange (51) und eine sechste Verbindungsstange (52), die schräg angeordnet sind und zwischen einem hinteren Ende der Sitzplatte (5) und dem dritten Verbindungsrahmen (3) verbunden sind; sowohl die fünfte Verbindungsstange (51) als auch die sechste Verbindungsstange (52) erstrecken sich von oben nach unten nach vorne; ein oberes Ende und ein unteres Ende der fünften Verbindungsstange (51) sind jeweils drehbar am dritten Verbindungsrahmen (3) bzw. an der Sitzplatte befestigt; das untere Ende der sechsten Verbindungsstange (52) ist drehbar am dritten Verbindungsrahmen (3) befestigt; am hinteren Ende der Sitzplatte (5) ist eine bogenförmige Führungsnut (50) ausgebildet; das obere Ende der sechsten Verbindungsstange (52) ist gleitend in die bogenförmige Führungsnut (50) eingepasst, und der Mittelpunkt der bogenförmigen Führungsnut (50) liegt auf einer Drehachse des oberen Endes der fünften Verbindungsstange (51); ein mittlerer Abschnitt der fünften Verbindungsstange (51) ist drehbar an einem oberen Ende einer siebten Verbindungsstange (53) befestigt; der dritte Verbindungsrahmen (3) umfasst eine Verbindungsstrebe (30); und ein mittlerer Abschnitt der Verbindungsstrebe (30) ist drehbar am dritten Verbindungsrahmen (3) befestigt, ein oberes Ende der Verbindungsstrebe (30) ist drehbar am unteren Ende der siebten Verbindungsstange (53) befestigt, und ein unteres Ende der Verbindungsstrebe (30) ist drehbar am vierten Verbindungsrahmen (4) befestigt,
**dadurch gekennzeichnet, dass**
eine erste Stützverbindungsstange (57) und eine zweite Stützverbindungsstange (58) zwischen der Sitzplatte (5) und der fünften Verbindungsstange (51) angeordnet sind; das untere Ende der ersten Stützverbindungsstange (57) drehbar an der fünften Verbindungsstange (51) befestigt ist; das obere Ende der zweiten Stützverbindungsstange (58) drehbar an der Sitzplatte (5) befestigt ist; das untere Ende der zweiten Stützverbindungsstange (58) drehbar am oberen Ende der ersten Stützverbindungsstange (57) befestigt ist; und am oberen Ende der ersten Stützverbindungsstange (57) ein Begrenzungsvorsprung (59) zum Abstützen der zweiten Stützverbindungsstange (58) vorgesehen ist, um ein Herabschwingen der zweiten Stützverbindungsstange um ihr unteres Ende zu begrenzen.

2. Der zusammenklappbare Roller nach Anspruch 1, wobei der erste Verbindungsrahmen drehbar an den vorderen Enden der ersten Verriegelungshaken befestigt ist, an den Drehgelenken des dritten Verbindungsrahmens mit dem zweiten Verbindungsrahmen horizontale Wellenabschnitte vorgesehen sind und die ersten Verriegelungshaken an den horizontalen Wellenabschnitten eingehängt sind.

3. Zusammenklappbarer Roller nach Anspruch 2, wobei an den ersten Verriegelungshaken ein Tragegriff angebracht ist; und wenn der Tragegriff nach oben bewegt wird, werden der vordere Rahmen und der hintere Rahmen zusammengeklappt, und die ersten Verriegelungshaken werden von den horizontalen Wellenabschnitten gelöst.

4. Zusammenklappbarer Roller nach Anspruch 2, wobei am vorderen Rahmen eine vordere Rahmenschale vorgesehen ist, an der Innenseite des hinteren Endes der vorderen Rahmenschale eine Druckfeder vorgesehen ist und die ersten Verriegelungshaken unter der Wirkung der Druckfeder dazu neigen, sich in Richtung der horizontalen Wellenabschnitte umzuklappen.

5. Der zusammenklappbare Roller nach Anspruch 1, wobei ein zweiter Verriegelungshaken am ersten Verbindungsrahmen angeordnet ist; der zweite Verriegelungshaken, der von seinem Hakenabschnitt abweicht, drehbar am ersten Verbindungsrahmen befestigt ist; eine Torsionsfeder zwischen dem zweiten Verriegelungshaken und dem ersten Verbindungsrahmen angeordnet ist; eine Verriegelungssäule am vierten Verbindungsrahmen angeordnet ist; und, wenn der vordere Rahmen und der hintere Rahmen zusammengeklappt sind, der zweite Verriegelungshaken an der Verriegelungssäule eingehakt ist und der zweite Verriegelungshaken unter der Wirkung der Torsionsfeder dazu neigt, sich in Richtung der Verriegelungssäule zu drehen.

6. Der zusammenklappbare Roller nach Anspruch 1, wobei die fünfte Verbindungsstange einen sich in ihrer Längsrichtung erstreckenden Innenhohlraum aufweist und die sechste Verbindungsstange in dem Innenhohlraum angeordnet ist.

7. Zusammenklappbarer Roller nach Anspruch 1, wobei an der Rückseite des hinteren Befestigungsabschnitts Stützradrahmen angeordnet sind und an den hinteren Enden der Stützradrahmen zwei in vertikaler Richtung beabstandete Stützräder angeordnet sind.

## Revendications

1. Trottinette pliable, comprenant un châssis avant et un châssis arrière, dans laquelle le châssis avant comprend une partie de fixation avant (101), ainsi qu'un premier châssis de liaison (1) et un deuxième châssis de liaison (2),
qui s'étendent toutes deux longitudinalement ; les extrémités avant et arrière du premier cadre de liaison (1)
sont situées de manière opposée au-dessus des extrémités avant et arrière du deuxième cadre de liaison (2) ; le cadre arrière comprend une partie de fixation arrière (102), ainsi qu'un troisième cadre de liaison (3) et un quatrième cadre de liaison (4), qui s'étendent tous deux longitudinalement ; l'extrémité avant du premier cadre de liaison et l'extrémité avant du deuxième cadre de liaison sont toutes deux fixées à la partie de fixation avant de manière rotative ; une extrémité avant du troisième cadre de liaison (3) est fixée à l'extrémité arrière du premier cadre de liaison (1) de manière rotative ; la partie du troisième cadre de liaison (3) s'écartant de son extrémité est fixée à l'extrémité arrière du deuxième cadre de liaison (2) de manière rotative ; et une extrémité arrière du troisième cadre de liaison (3) est reliée à la partie de fixation arrière ; et l'extrémité arrière du quatrième cadre de liaison (4) est fixée au troisième cadre de liaison (3) ou à la partie de fixation arrière de manière rotative, tandis que son extrémité arrière est fixée au premier cadre de liaison (1) de manière rotative,
dans lequel le troisième châssis de liaison (3) comprend deux troisièmes bielles de liaison (31) disposées de manière opposée, respectivement à gauche et à droite ; le quatrième châssis de liaison (4) comprend deux quatrièmes bielles de liaison (41) disposées de manière opposée, respectivement à gauche et à droite ; les deux quatrièmes bielles de liaison (41) sont situées de manière opposée entre les deux troisièmes bielles de liaison (31) ; le premier châssis de liaison (1) comprend deux premières bielles (11) disposées de manière opposée ; une bielle transversale (12) est reliée entre les deux premières bielles (11) ; les extrémités avant des quatrièmes bielles (41) sont fixées à la bielle transversale de manière rotative ; le deuxième châssis de liaison (2) comprend deux deuxièmes bielles (21) disposées de manière opposée, respectivement à gauche et à droite, par « » ; et l'extrémité arrière de chacune des deuxièmes bielles (21) est fixée à l'une des troisièmes bielles (31) de manière rotative
et dans lequel un siège rabattable est disposé au-dessus du troisième châssis de liaison (3) ; le siège rabattable comprend une plaque d'assise (5) ; une cinquième bielle (51) et une sixième bielle (52), disposées en oblique, sont reliées entre une extrémité arrière de la plaque d'assise (5) et le troisième châssis de liaison (3) ; la cinquième tige de liaison (51) et la sixième tige de liaison (52) s'étendent toutes deux vers l'avant, de haut en bas ; une extrémité supérieure et une extrémité inférieure de la cinquième tige de liaison (51) sont respectivement fixées de manière rotative au troisième châssis de liaison (3) et à la plaque d'assise ; l'extrémité inférieure de la sixième tige de liaison (52) est fixée de manière rotative au troisième châssis de liaison (3) ; une rainure de guidage en forme d'arc (50) est formée à l'extrémité arrière de la plaque d'appui (5) ; l'extrémité supérieure de la sixième tige de liaison (52) est logée de manière coulissante dans la rainure de guidage en forme d'arc (50), et le centre de la rainure de guidage en forme d'arc (50) est situé sur l'axe de rotation de l'extrémité supérieure de la cinquième tige de liaison (51) ; une partie centrale de la cinquième tige de liaison (51) est fixée de manière rotative à une extrémité supérieure d'une septième tige de liaison (53) ; le troisième châssis de liaison (3) comprend une entretoise de liaison (30) ; et une partie centrale de la entretoise de liaison (30) est fixée au troisième châssis de liaison (3) de manière rotative, une extrémité supérieure de la entretoise de liaison (30) est fixée à l'extrémité inférieure de la septième bielle (53) de manière rotative, et une extrémité inférieure de la entretoise de liaison (30) est fixée au quatrième châssis de liaison (4) de manière rotative,
**caractérisé en ce que**
une première tige de liaison de support (57) et une deuxième tige de liaison de support (58) sont disposées entre la plaque d'assise (5) et la cinquième tige de liaison (51) ; l'extrémité inférieure de la première bielle de support (57) est fixée à la cinquième bielle (51) de manière rotative ; l'extrémité supérieure de la deuxième bielle de support (58) est fixée à la plaque d'assise (5) de manière rotative ; l'extrémité inférieure de la deuxième bielle de support (58) est fixée à l'extrémité supérieure de la première bielle de support (57) de manière rotative ; et, une saillie de limitation (59) destinée à soutenir la deuxième bielle de support (58) afin d'empêcher celle-ci de basculer vers le bas autour de son extrémité inférieure est prévue à l'extrémité supérieure de la première bielle de support (57).

2. Trottinette pliable selon la revendication 1, dans laquelle le premier cadre de liaison est fixé de manière pivotante aux extrémités avant de premiers crochets de verrouillage, des parties d'axe horizontales sont prévues au niveau des articulations pivotantes du troisième cadre de liaison avec le deuxième cadre de liaison, et les premiers crochets de verrouillage sont accrochés sur les parties d'axe horizontales.

3. La trottinette pliable selon la revendication 2, dans laquelle une poignée de levage est reliée aux premiers crochets de verrouillage ; et, lorsque la poignée de levage est déplacée vers le haut, le cadre avant et le cadre arrière se replient, et les premiers crochets de verrouillage se désengagent des parties d'axe horizontales.

4. Trottinette pliable selon la revendication 2, dans laquelle une coque de cadre avant est prévue au niveau du cadre avant, un ressort de compression est prévu sur la face interne de l'extrémité arrière de la coque de cadre avant, et les premiers crochets de verrouillage ont tendance à basculer vers les parties d'axe horizontales sous l'action du ressort de compression.

5. Trottinette pliable selon la revendication 1, dans laquelle un deuxième crochet de verrouillage est agencé sur le premier cadre de liaison ; le deuxième crochet de verrouillage, dont la partie en forme de crochet fait saillie, est fixé au premier cadre de liaison de manière rotative ; un ressort de torsion est disposé entre le deuxième crochet de verrouillage et le premier cadre de liaison ; une colonne de verrouillage est disposée sur le quatrième cadre de liaison ; et, lorsque le cadre avant et le cadre arrière sont repliés, le deuxième crochet de verrouillage s'accroche à la colonne de verrouillage, et le deuxième crochet de verrouillage a tendance à pivoter vers la colonne de verrouillage sous l'action du ressort de torsion.

6. Trottinette pliable selon la revendication 1, dans laquelle la cinquième tige de liaison comporte une cavité interne s'étendant dans le sens de sa longueur, et la sixième tige de liaison est logée dans ladite cavité interne.

7. Trottinette pliable selon la revendication 1, dans laquelle des châssis de roues auxiliaires sont disposés à l'arrière de la partie de fixation arrière, et deux roues auxiliaires espacées verticalement sont disposées aux extrémités arrière des châssis de roues auxiliaires.
